# EUROPEAN PATENT SPECIFICATION

(11) **EP 4 479 800 B1**
(45) Date of publication and mention of the grant of the patent: **02.04.2025**
(21) Application number: 24720089.2
(22) Date of filing: 15.04.2024
(51) Int. Cl.: G03B 17/55, G02B 27/00, G03B 30/00, H04N 23/51, H04N 23/52, H04N 23/55, H04N 23/57

(54) **OPTICAL LENS ASSEMBLY, CAMERA MODULE AND CAMERA SYSTEM**
OPTISCHE LINSENANORDNUNG, KAMERAMODUL UND KAMERASYSTEM
ASSEMBLAGE OPTIQUE DE LENTILLES, MODULE DE CAMERA ET SYSTÈME DE CAMÉRA.

(30) Priority: 17.04.2023 DE 102023203473; 17.04.2023 DE 102023203474
(43) Date of publication of application: 25.12.2024
(73) Proprietor: Via optronics AG, 90411 Nürnberg (DE)
(72) Inventor: TIONGSON, Christopher, San Antonio, Pasig City, 1605 (PH); BOYLAN, Peter, 90562 Heroldsberg (DE); CVETANOVIC, Milos, 95496 Glashütten (DE)
(74) Representative: Rau, Schneck & Hübner Patentanwälte Rechtsanwälte PartGmbB
(86) International application number: PCT/EP2024/060164
(87) International publication number: WO 2024/218043

(56) References cited:
- EP-A1- 3 745 198
- CN-B- 112 198 744
- US-A1- 2021 199 953
- US-A1- 2022 357 572

## Description

The present application claims priority of German patent application DE 10 2023 203 473.5 and of German patent application DE 10 2023 203 474.3, the contents of which are incorporated herein by reference.

The present inventive technology concerns an optical lens assembly, in particular for outdoor use. Such optical lens assemblies may be used in particular in camera modules, such as vehicle surround cameras and/or webcams. Further, such optical lens assemblies may be used in telescopes, binoculars and/or spectacles. The inventive technology further concerns a camera module, in particular for automotive applications, such as vehicle surround and e-Mirror cameras, as well as a respective camera system.

Optical lens assemblies, for example as part of vehicle cameras, are exposed to all kinds of environmental conditions, such as moisture, humidity, and/or extreme temperatures. In particular fog and/or ice impairs the optical function of such optical lens assemblies. To mitigate the effect of fog and/or frost, it is known to heat the optical lens assembly. Regularly, external heaters, such as heater blankets, are installed next to the optical lens assembly, in particular at least partially surrounding the optical lens assembly. Such external heaters are inefficient and require long heating times, as the complete optical lens assembly has to be heated. Heating devices may also be integrated into the optical lens assembly. For example, heating elements may be arranged on a front surface or a rear surface of a front element of the optical lens assembly. When installed on the front or outer surface of the front element, the heating element is exposed to environmental conditions. When installed on the rear or inner surface of the front element, the heating element impairs the arrangement of further lenses in the so-called lens stacking. In both cases, the heating element intrudes in the optical pathway of the optical lens assembly, impairing the optical properties.

CN 112 198 744 B discloses an optical device and application thereof. US 2022/0357572 A1 discloses an optical device and use thereof. US 2021/0199953 A1 discloses a camera module, vehicle camera and monitoring system. EP 3 745 198 A1 discloses an optical device with heating element.

Moreover, integrating heating devices in the optical lens assembly, requires to contact the heating devices in the optical lens assembly. Routing and connecting electric wires within the optical lens assembly is complicated. For example, conductor wires may be routed inside the lens mount, requiring the conductors to pass lens elements arranged therein. This may interfere with the arrangement of the lens elements. Moreover, wiring components may be exposed to forces required to hold lens elements in place. In particular in outdoor applications, the optical lens assembly requires waterproofing. Routing the wires around the waterproofing may impair the sealing properties of the optical lens assembly.

It is an object of the present inventive technology to improve an optical lens assembly, in particular to provide an optical lens assembly with efficient and reliable heating without impairing the optical properties and/or sealing of the optical lens arrangement.

This object is achieved by an optical lens assembly according to claim 1. The optical lens assembly comprises a lens mount, a lens arrangement of one or more lens elements inside the lens mount, and a heating element for heating at least one of the one or more lens elements, in particular a front element at an object-side of the lens arrangement. The lens mount, in particular a lens holder thereof, comprises a lens mount wall defining an inner space for accommodating one or more lens elements of the lens arrangement, wherein the heating element is housed within the lens mount wall. The heating element is securely arranged inside the lens mount wall, in particular protected from the environment. The heating element is housed inside the lens mount wall so that it has no direct contact with the one or more lens elements. Advantageously, the heating element is integrated in the optical lens assembly without impairing the positioning and/or insertion of the one or more lens elements inside the lens mount. Moreover, the flexibility with regard to usable lens elements is increased. In particular, the heating element may be preinstalled in the lens mount. Insertion of the one or more lens elements does not require interaction with the heating element, e.g. by connecting the heating element to one or more of the lens elements, in particular the front element. Moreover, the heating element does not impair sealing properties of the optical lens assembly. As a further advantage, the heating element does not impair the optical properties of the lens assembly, in particular does not protrude in the optical path. Particularly advantageous, the heating element is not arranged in the region of or attached to the first (outer) or second (inner) surface of the front element, so that the heating element is neither subject to environmental hazards nor to forces acting on the lens elements. This results in a reliable and stable arrangement of the heating element.

As a further advantage, the heating element does not have any impact on or hinders the application of possible coatings on the first and/or second surface front element. Such coatings may be used for improving scratch resistance, anti-reflection and the like.

In the present context, an optical lens assembly is to be understood as an optical device for imaging an object at the object-side into an image on an image-side, which is opposite to the object-side. Such optical device may also be referred to as objective. In particular, when used in a telescope or binocular, the image may be directly observed by a user. In particular, when used in a camera module, the resulting image is sensed by an image sensor.

The optical lens assembly comprises a lens arrangement, also referred to as lens stack, of one or more elements. The lens arrangement is arranged in a lens mount, holding the lens elements of the lens arrangement in their respective position.

The lens mount may, in particular, comprise a lens holder and a lens cap. For example, the lens cap may be attached to, in particular screwed on, the lens holder, in particular a lens barrel thereof, at the object-side of the lens holder. The lens cap may secure the lens elements arranged inside the lens holder in place.

The lens mount may further comprise one or more spacer components arranged between the lens cap, the lens holder and/or the lens arrangement.

The lens mount may further comprise one or more heat transfer components for transferring heat from the heating element to at least one of the one or more lens elements.

The lens holder may have a lens barrel, in which one or more of the lens elements of the lens arrangement are arranged. The lens holder may additionally comprise a base portion (which may be also referred to as front camera housing) at a side of the lens barrel opposite to the lens cap. The base portion may, in particular, serve for connecting to further components, in particular to further components of a camera module such as a printed circuit board assembly and/or a back cover. The lens holder and the base portion may be configured as a single piece.

The lens mount wall may be a wall of the lens holder, in particular of the lens barrel. **In** that case, the lens mount wall may also be referred to as lens holder wall or lens barrel wall. The lens mount wall may, additionally or alternatively, comprise a wall of the lens cap and/or a lens retainer. The lens mount wall may in particular comprise any space formed between components of the lens mount, in particular formed between the lens cap and the lens holder.

Housing the heating element within the lens mount wall in particular is to be understood in that the heating element is surrounded by the lens mount wall, in particular by one or more different components of the lens mount. In particular, the heating element is covered by parts and/or components of the lens mount, in particular of the lens holder, in direction towards the inner space, in which the one or more lens elements are arranged, and the outside of the optical lens assembly.

Preferably, the heating element is housed in the wall of the lens holder (lens holder wall), in particular the wall of the lens barrel (lens barrel wall). This allows for a particularly secure positioning of the heating element, in particular without requiring special front elements, e.g. front elements with grooves for receiving the heating element and/or front elements with the heating element embedded therein.

For example, the heating element may be placed in a cavity of the lens mount, in particular the lens holder. For example, the lens mount, in particular the lens holder, may be provided with a cavity. The heating element may be placed inside the cavity and the cavity may be closed. For example, a closure component may be attached to the lens mount, in particular the lens holder. It is also possible that, after insertion of the heating element, the cavity is filled with a material, in particular by moulding. This allows for a particularly high design freedom of the lens mount, in particular the lens holder. The lens holder may be of a different material than the closure component or the filler material.

The lens mount, in particular the lens holder, may, at least partially, be made of metal, in particular aluminium. This allows for a better heat dissipation, in particular of heat generated by electrical components of a camera module, e.g. a printed circuit assembly, in particular an image sensor thereof.

It is also possible that the lens mount, in particular the lens holder, are made from plastic material. Plastic material allows for an easy and cost efficient production with high design freedom. Moreover, plastic material may be used to embed the heating element, in particular via over-moulding.

The heating element may, in particular, comprise a resistive heating element, such as heating wire. The heating element may have a heating wire wrapping around the lateral surface of the front element. Such heating elements are efficient, easily installable as well as reliable.

The heating element is housed inside the lens mount wall so that it has no direct contact with the one or more lens elements. This allows for a particularly low impact of the heating element on the positioning of the lens elements and the sealing of the optical lens assembly. Moreover, the heating element is securely shielded from any forces, which might act on the lens elements, and/or environmental impacts. Preferably, the heating element is positioned closely to the inner wall of the lens mount to permit good heat transfer to the lens element.

For example, the heating element, which is housed within the lens mount wall so that it has no direct contact with the one or more lens elements, may be positioned close to one of the lens elements, in particular the front element, advantageously improving the transfer of heat to the lens element. For example, the heating element may be positioned inside a groove of the lens mount wall, being surrounded by the lens mount wall to at least three sides.

According to a preferred aspect of the inventive technology, the lens arrangement comprises a front element at an object-side of the lens arrangement. The front element comprises a first surface facing the object-side, a second surface opposite to the first surface, and a lateral surface connecting the first surface and the second surface. The heating element is arranged circumferentially along the lateral surface of the front element. This arrangement ensures direct and efficient heating of the front element.

A front element in the sense of the present inventive technology is to be understood as the lens element of the lens arrangement, which faces the object-side. In other words, the front element is the outermost lens of the lens arrangement on the object-side. The front element is the lens element through which light enters the optical lens assembly from the object-side. The front element may have an optical function. It is also possible that the front element may be or comprise a cover glass, in particular a flat cover glass, without optical function. The front element may, in particular, be mounted inside or outside of the lens mount, in particular inside or outside of a lens cap of the lens mount. Preferably, the front element may be arranged at an object-side of a lens holder, in particular a lens barrel. For example, the front element may be secured in place via a lens cap.

The front element comprises the first surface at an object-side. The first surface is the surface facing outwardly from the optical lens assembly. The first surface may also be referred to as the outer surface of the front element. The second surface, opposite to the first surface, faces the inner side of the optical lens assembly, in particular further lens elements of the arrangement. The second surface may also be referred to as inner surface. First and second surface are connected via a lateral surface of the front element. The lateral surface of the front element is the radially outward surface of the front element. It essentially extends along an optical axis of the lens arrangement. The optical axis may also be referred to as the longitudinal axis of the lens arrangement.

An optical material of the lens elements, in particular of the front element may, e.g., be glass or a transparent polymer, such as acrylic glass.

According to a preferred aspect of the inventive technology, the heating element is embedded in the lens mount wall, in particular the lens holder wall, preferably the lens barrel wall. Being embedded within the lens mount wall, in particular the lens barrel wall is in particular to be understood as being surrounded by the lens mount wall, in particular the lens barrel wall to all sides.

For example, the heating element may be overmoulded by the lens mount wall, e.g. during injection moulding of the lens mount. This ensures a particularly secure arrangement of the heating element. The heating element is reliably protected from environmental influences. Further, the arrangement of the heating element does not compromise sealing, in particular waterproofing, of the lens mount.

It is also possible to use multiple-component injection moulding, in particular two-component injection moulding. This way, different materials can be combined in the lens mount. In particular, different plastic materials may be used. For example, a part covering the heating element may be formed from plastic with a particularly high thermal conductivity.

Additionally to the heating element, also wiring for supplying the heating element with electrical energy may be routed, in particular embedded, within the lens mount wall, in particular within the lens holder wall. This way, a simple and reliable electrical connection is established. It is also possible, that the heating element comprises a secondary coil of an induction coil arrangement, which is housed, in particular embedded, within the lens mount wall. This way, the embedded heating element can be supplied with energy without requiring mechanical contacts.

For example, the heating element may comprise a secondary coil of a conduction coil arrangement for supplying the heating element with electrical energy. This simplifies the electric energy supply. The heating element can be easily housed, in particular embedded, within the lens mount wall without requiring physical connections for energy supply. The heating element can be completely embedded, in particular hermetically sealed, within the lens mount wall.

A primary coil of the induction coil arrangement may be incorporated in the optical lens assembly, for example in the lens mount. For example, the primary coil of the heating coil arrangement may be housed, in particular embedded, in the lens cap and/or the lens holder. It is also possible that a primary coil of the induction coil arrangement is not part of the optical lens assembly. For example, the primary coil may be part of further components of a camera module. A primary coil of the induction coil arrangement may also be part of an enclosure, for example camera enclosure, in which the optical lens assembly is arranged during usage.

According to a preferred aspect of the inventive technology, the lens mount comprises a lens holder and a lens cap, wherein the lens cap is attached to the lens holder at an object side of the optical lens assembly. The heating element is arranged in between the lens cap and the lens holder, in particular within an annular space formed between the lens cap and the lens holder. Arranging the heating element between the lens cap and the lens holder allows for a particularly easy assembly of the optical lens arrangement, ensuring that the heating element is safely housed within the lens mount wall. For example, it is not necessary to insert the heating element within the lens holder wall, in particular the wall of a lens barrel, e.g. via injection moulding. This increases the flexibility in the choice of the lens holder, in particular the material, of which the lens holder is made. Further, the heating element can be easily replaced by removing the cap, increasing the maintainability of the optical lens assembly. It is also possible that the camera module is hermetically sealed, e.g. by glue, to avoid moister ingress.

According to a preferred aspect of the inventive technology, the lens mount comprises a heat transfer component arranged between the heating element and at least one or more lens elements, in particular a front element, of the lens arrangement. A heat transfer component ensures an efficient heat transfer from the heating element to the lens element to be heated.

The heat transfer component may be part of the lens mount wall, which houses the heating element. The heat transfer component may be made of metal, in particular aluminium and/or brass. The heat transfer component may be a separate part of the lens mount and/or integrated in other components of the lens mount, in particular in the lens holder. The heat transfer component may, e.g. be part of a lens holder wall, in particular being configured in one piece with other parts of the lens mount wall. For example, the heat transfer component may be a protrusion of the lens mount wall protruding, in particular in direction of the optical axis, between the heating element and the lens element, in particular the front element.

For example, it is possible to include the heat transfer component in the lens holder by multiple-component injection moulding of the lens holder. For example, the heat transfer component may be moulded from a plastic material, which has a higher thermal conductivity than plastic material used for moulding other parts of the lens holder.

According to a preferred aspect of the inventive technology, the heat transfer component is a spacer ring accommodating at least one of the lens elements, in particular, the front element.

Using a spacer ring (inductive or non-inductive) as heat transfer element is particularly suitable. Different functionalities can be combined in the spacer ring, namely the heat transfer as well as a precisely defined arrangement of the lens element. The spacer ring is, in particular, part of the lens mount for mounting the one or more lens elements.

According to a preferred aspect of the inventive technology, the heat transfer component contacts at least one or more of the lens elements, in particular the front element, at least circumferentially along a lateral surface of the front element. Supplying the heat to the lens element via the lateral surface has proven particularly advantageous. The heat can be efficiently supplied to the lens element, in particular the front element, without impairing optical properties of the lens element. The lens element can be heated in an efficient and homogenous way.

According to a preferred aspect of the inventive technology, the heat transfer component contacts at least one or more of the lens elements, in particular the front element, on one or preferably on at least two surfaces thereof. Preferably, the heat transfer component contacts at least one lens element circumferentially along the lateral side and at least on one of the first and the second surface, preferably on the second surface. This way, heat transfer to the lens element, in particular the front element, is particularly efficient and homogenous. For example, the heat transfer component may be configured as a spacer ring, which accommodates the lens element to be heated. Contacting the lens element on at least two surfaces results in a particularly precise and stable positioning of the lens element via the spacer ring.

According to a preferred aspect of the inventive technology, the lens mount comprises a thermal insulator for thermal shielding of parts of the lens mount, in particular the lens holder, from the heating element and/or a heat transfer component, which is arranged between the heating element and at least one or more of the lens elements, in particular the front element. The thermal insulator ensures that heat produced by the heating element cannot damage other parts of the lens mount, in particular parts made of plastic material. Moreover, the thermal insulator ensures that the produced heat is efficiently transferred to at least one lens element to be heated and not to other parts of the optical lens arrangement, which do not require heating. For example, the thermal insulator may particularly advantageously be placed between a heat transfer component and other parts of a lens mount, which may be build from metal. This way, heat flux through the material of the lens mount away from the lens element to be heated is reduced, in particular, avoided.

According to a preferred aspect of the inventive technology, the optical lens assembly comprises wiring for supplying the heating element with electrical energy. Further components, in particular an enclosure, which comprise the wiring are not necessary.

According to a preferred aspect of the inventive technology, the wiring is housed inside the lens mount, in particular within a lens mount wall. For example, the wiring may be routed within a lens holder wall.

According to a preferred aspect of the inventive technology, the wiring is embedded within a lens mount wall, in particular inside a lens holder wall. For example, the wiring may be inserted through a cavity or embedded by over-moulding the wiring during manufacturing the lens mount, e.g. via injection moulding of the lens mount and/or parts thereof, for example the lens holder. The wiring is protected from environmental influences and securely held in position.

Preferably, the heating element and the wiring may be inserted or embedded inside the lens mount wall, in particular the lens holder wall, by over-moulding the heating element and the wiring, when forming the lens mount, in particular the lens holder.

Particularly preferable, the wiring may be routed within the lens mount wall, in particular a lens holder wall, to an end face thereof, which opposes the object-side of the optical lens assembly. In particular, the wiring may be routed within the lens mount wall along essentially the entire length of the lens mount, in the direction of an optical axis of the lens arrangement, without impairing the lens arrangement. As such, the wiring can be easily routed to the back side of the optical lens assembly. This is in particular advantageous, if the wiring shall exit the optical lens assembly at the respective end face. In particular, in camera applications, the wiring can be connected to a printed circuit board assembly of a camera module. This allows to supply electrical energy to the heating device via the printed circuit board assembly of the camera module.

A wiring of the heating device for supplying electrical energy to the heating element may be routed, in particular housed, within the lens mount wall. Routing the wiring within the lens mount wall has the advantage that routing the wiring does not interfere with the lens elements arranged within the inner space of the lens mount. The wiring is protected from environmental conditions and from forces, which may be applied for holding the lens elements in place.

The lens mount may comprise a lens cap and a lens holder, the latter in particular being or comprising a lens barrel. Particularly preferably, the lens mount wall is a lens holder wall, in particular a lens barrel wall. Advantageously, the wiring is routed, in particular housed, within a lens holder wall.

According to a preferred aspect of the inventive technology, the wiring is recessed inside a groove of the lens mount wall, in particular, inside a groove of a lens holder wall. Preferably, the lens mount wall, in particular, the lens holder wall, is manufactured with a respective groove for receiving the wiring. The wiring can then be pre-installed before the assembly of the optical lens assembly. Preferably, the assembly of the optical lens assembly is unaffected by the pre-installed wiring, so that, e.g. existing processes can be used for the assembly.

According to a preferred aspect of the inventive technology, the wiring is embedded within the lens mount wall, in particular, within the lens holder wall. For example, the wiring may be embedded during the manufacturing process of the lens mount, in particular the lens holder. For example, the wiring may be embedded by over-moulding the wiring during manufacturing the lens mount, e.g. via injection moulding of the lens mount and/or parts thereof, for example the lens holder. This ensures a particularly secure protection of the wiring. The wiring can be provided as an integral part together with the lens mount, in particular the lens holder, e.g. a lens barrel thereof.

According to a preferred aspect of the inventive technology, the wiring is routed within the lens mount wall, in particular a lens holder wall, to an end face thereof, which opposes the object-side of the optical lens assembly. In particular, the wiring may be routed within the lens mount wall along essentially the entire length of the lens mount, in direction of an optical axis of the lens arrangement, without impairing the lens arrangement. As such, the wiring can be easily routed to a back side of the optical lens assembly. This is in particular advantageous, if the wiring shall exit the optical lens assembly at the respective end face. In particular, in camera applications, the wiring can be connected to a printed circuit board assembly of a camera module. This allows to supply electrical energy to the heating device via the printed circuit board assembly of the camera module.

According to a preferred aspect of the inventive technology, the lens cap is attached to the lens holder, in particular to a lens barrel thereof, in a sealing manner, in particular via one or more sealing elements. For example, the lens cap may be attached in a sealing manner, using at least one O-ring. This way, the optical lens assembly is particularly suitable for outdoor use, in particular in wet conditions. Routing the wiring out of the lens cap or within a lens mount wall, does not impair the sealing achieved by at least one sealing element.

According to a preferred aspect of the inventive technology, the wiring is routed radially out of the lens holder, in particular via a through barrel connector. For example, the wiring may be radially routed out of a lens holder, in particular out of the lens barrel. For example, the wiring may be routed within the lens holder wall in the direction of an optical axis of the lens arrangement from the position of the heating element at an object-side of the lens mount to an exit position away from the object-side. At the exit position, the wiring may be routed radially out of the lens mount, in particular, of the lens holder. Particularly advantageously, the wiring is routed out via a through barrel connector, allowing for an easy connection of external components to the through barrel connector.

It is a further object of the inventive technology to improve a camera module, in particular for automotive applications.

This object is achieved by a camera module according to claim 11. The camera module comprises an optical lens assembly as described above. The advantages and preferable features of the camera module coincide with those of the optical lens assembly. The camera module may incorporate any of the above-described optional features.

The camera module may, additionally to the optical lens assembly, comprise a printed circuit board assembly comprising an image sensor for sensing an image generated with help of the optical lens assembly. Further, the camera module may comprise a back cover for covering the printed circuit board assembly at a side opposite of the optical lens assembly. Particularly preferably, the lens mount of the optical lens assembly comprises a lens holder having a lens barrel and a base portion, where the base portion covers the printed circuit board assembly at an ob-ject-side thereof.

According to a preferred aspect of the inventive technology, the camera module comprises a printed circuit board assembly with an image sensor, wherein the heating element is connected to the printed circuit board assembly for supplying electrical energy to the heating element. This allows for a simple connection of the camera module, in particular via a single connector, e.g. via a FAKRA connector. For example, connection can be established by wiring, which is routed within the lens mount wall, in particular the lens barrel wall.

It is a further object of the present inventive technology to improve a camera system, in particular for automotive applications.

This is achieved by a camera system according to claim 13. The camera system comprises the above-described camera module as well as a camera enclosure, to which the camera module is attached. A camera enclosure may be realized by parts of a vehicle. For example, the camera enclosure may be installed behind a wing front panel. In such camera systems, the camera module may, for example, be used as a vehicle surround camera.

According to a preferred aspect of the inventive technology, the camera module is detachably attached to the camera enclosure, in particular by a snap-fit connection. This allows easy installation, replacement and maintenance of the camera module.

According to a preferred aspect of the inventive technology, the camera enclosure comprises enclosure wirings supplying electrical energy to the heating element of the optical lens assembly. This simplifies the electrical connection of the heating element. In particular, complicated wirings do not have to be integrated into the camera module. Particularly preferably, the camera enclosure may comprise a primary coil of an induction coil arrangement interacting with a secondary coil comprised by the heating element.

The present disclosure also relates to further aspects of optical lens assemblies, camera modules, and/or front elements for lens assemblies, which alone or in combination with other aspects may be an independent aspect of the present invention.

According to an aspect of the disclosed technology, which is not part of the present invention, the heating element may be attached to or may be part of one of the lens elements, in particular the front element.

In a disclosed example, which is not part of the present invention, the heating element may comprise transparent conductors, such as conductive coatings, preferably a conductive coating of PEDOT. Such conductive coatings may cover at least parts the lateral surface. It is also possible that the conductive coating covers least parts of the first and/or second surface. Preferably, the heating only comprises a heating element arranged circumferentially along the lateral surface of the front element. Particularly preferably, the heating element is realized by a circumferentially arranged heating resistor, in particular a heating wire wrapped circumferentially along the lateral surface. Advantageously, the heating element is neither arranged on the first nor on the second surface but only circumferentially along the lateral surface.

According to an aspect of the disclosed technology, which is not part of the present invention, the heating element is recessed inwardly with respect to a radial extension of the lateral surface. This improves the heat transfer from the heating element to the front element, in particular to segments thereof close to the optical axis. Further, recessing the heating element stabilizes the arrangement and improves its protection by the front element.

According to an aspect of the disclosed technology, which is not part of the present invention, the heating element is placed inside a groove formed circumferentially along the lateral surface. This allows for a particularly reliable arrangement of the heating element. The heating element is recessed inside the groove and held in place with regard to its radial and axial position circumferentially along the lateral surface.

According to an aspect of the disclosed technology, which is not part of the present invention, the heating element is at least partially embedded in an optical material of the front element. For example, a groove, in which the heating element is recessed, may be closed by optical material of the heating element. This further improves heat transfer and stability of the heating element. For example, the heating element may be embedded in the optical material but for lead outs needed to connect the heating element to electrical wiring. Further, openings in the embedding may be used for heat dissipation.

According to an aspect of the disclosed technology, which is not part of the present invention the heating element is completely embedded in an optical material of the front element. The heating element is securely positioned and protected inside the front element. For example, the heating element may be a secondary coil of an induction coil arrangement. This way, electric energy needed for operating the heating element may be provided without leads or wiring leading out of the front element. A primary coil of the induction coil arrangement may be arranged in a lens cap or even outside of the optical lens assembly. This further simplifies the wiring needed for connecting the optical lens assembly to the electrical energy source.

According to an aspect of the disclosed technology, which is not part of the present invention, a front element for an optical lens assembly comprises a first surface facing an object-side, a second surface opposite to the first surface, a lateral surface connecting the first surface and the second surface, and a heating element. The heating element is arranged circumferentially along the lateral surface and recessed inwardly with respect to a radial extension of the lateral surface.

The front element can be efficiently heated by the integrated heating element. The heating element is securely placed along the lateral surface of the front element, without impairing the optical properties thereof. The front element may comprise any of the optional features described with regard to the front element above. In particular, the front element may comprise a groove formed circumferentially along the lateral surface, in which the heating element is placed. The heating element may be at least partially, in particular completely, embedded in an optical material of the front element.

According to an aspect of the disclosed technology, which is not part of the present invention, an optical lens element, in particular a front element, for an optical lens assembly may comprise a heating element having a transparent conductor on at least one of the first and/or the second surface. In particular, the front element may comprise a transparent conductive coating of PEDOT. The PEDOT coating may particularly preferably be applied via inkjet printing. This allows to precisely apply the transparent conductive coating. It is additionally or alternatively possible to apply transparent conductors to at least parts of the first and/or second surface of the front element in form of a metal mesh. Using a PEDOT coating and/or a metal mesh as a transparent conductor on at least parts of the first and/or second surface of the front element is an independent aspect of the inventive technology described herein.

The disclosed technology also refers to an optical lens assembly having a lens mount, one or more lens elements arranged inside the lens mount and a heating device having a heating element for heating at least one of the one or more lens elements, wherein the heating element is arranged inside the lens mount. The lens mount comprises a lens holder and a lens cap, which is attached to the lens holder at an object-side of the optical lens assembly. A wiring of the heating device for supplying electrical energy to the heating element exits the lens mount through the lens cap. Routing the wiring out of the lens cap has the advantage that the wiring has not to be routed inside the lens mount, in particular inside the lens holder. As such, the wiring does not interfere with the one or more lens elements. Further, a sealing of the optical lens assembly is not compromised by the wiring. Particularly advantageously, the sealing can easily be achieved between the lens cap and the lens holder without being affected by the wiring. The wiring exiting out of the lens cap does not require a separate sealing. The resulting electrical connection is simple to establish and reliable. The manufacturing process is simplified, reducing the manufacturing costs. Preferably, the wiring may exit the lens mount through an opening in the lens cap, in particular through an opening on a lateral side of the lens cap. The opening may but does not have to comprise a sealing or waterproofing, in particular when the heating element is arranged inside the lens cap.

Further details, features and advantages of the inventive technology are obtained from the description of exemplary embodiments with reference to the figures, in which:
- Fig. 1: schematically shows an embodiment of a camera module, which is not part of the present invention,
- Fig. 2: schematically shows an exploded view of the camera module of fig. **1****,**
- Fig. 3: schematically shows a longitudinal section through an optical lens assembly of the camera module of fig. 1,
- Fig. 4: schematically shows a front element of the optical lens assembly of the camera module of fig. 1,
- Fig. 5: schematically shows a cross section through the front element of fig. 4,
- Fig. 6: schematically shows a further embodiment of a camera module, which is not part of the present invention,
- Fig. 7: schematically shows a cross section through parts of an optical lens assembly according to a further embodiment, which is not part of the present invention,
- Fig. 8: schematically shows an embodiment of a camera system comprising a camera module,
- Fig. 9: schematically shows a further embodiment of a camera system,
- Fig. 10: schematically shows a further embodiment of a camera system,
- Fig. 11: schematically shows a further embodiment of a front element for an optical lens assembly, which is not part of the present invention,
- Fig. 12: schematically shows a cross section through the front element of fig. 11,
- Fig. 13: schematically shows a further embodiment of a front element for an optical lens assembly, which is not part of the present invention,
- Fig. 14: schematically shows a cross section through the front element of fig. 13,
- Fig. 15: schematically shows a cross section through parts of a further embodiment of an optical lens assembly, which is not part of the present invention,
- Fig. 16: schematically shows a partial cross section through a camera system according to a further embodiment during assembly,
- Fig. 17: schematically shows a partial cross section through the camera system of fig. 16 after assembly,
- Fig. 18: schematically show a further embodiment of a camera module,
- Fig. 19: schematically shows a further embodiment of a camera module,
- Fig. 20: schematically shows a further embodiment of a front element for an optical lens assembly, which is not part of the present invention,
- Fig. 21: schematically shows a further embodiment of a front element for an optical lens assembly, which is not part of the present invention,
- Fig. 22: schematically shows a further embodiment of a camera module,
- Fig. 23: schematically shows a further embodiment of a camera module,
- Fig. 24: schematically shows a further embodiment of a camera module, and
- Fig. 25: schematically shows a further embodiment of a camera module.

Corresponding parts are identified with the same reference numbers in the respective figures and embodiments. Parts of different embodiments, which are functionally similar, but structurally differ, bear the same reference number with small letters "a", "b", ... appended thereto.

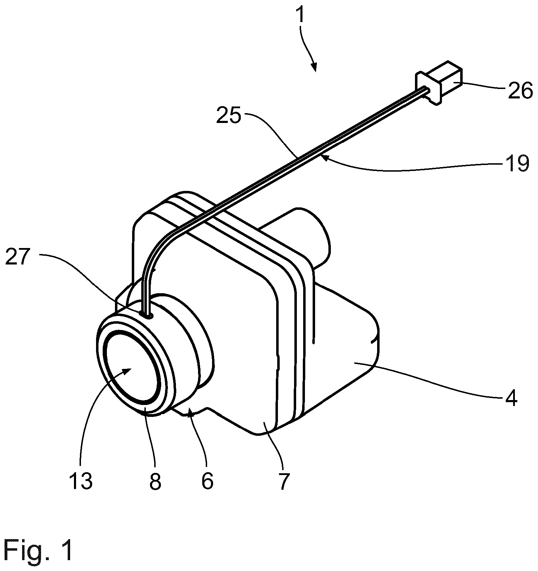

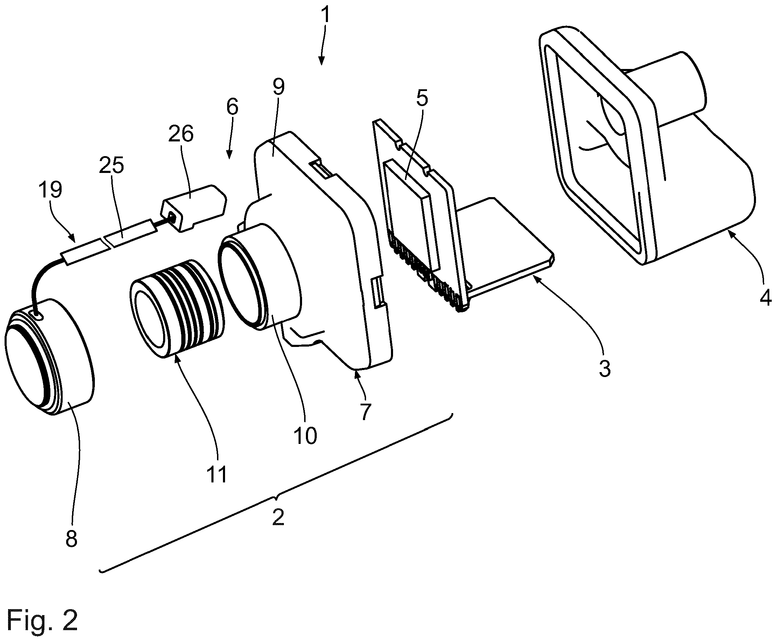

With regard to figs 1 to 5, a first embodiment of a camera module 1, which is not according to the present invention, is described. The camera module 1 may be used in automotive applications, e.g. as rear view camera or vehicle surround camera. The camera module 1 comprises an optical lens assembly 2, a printed circuit board (PCB) assembly 3 and a back cover 4. The printed circuit board assembly 3 comprises an image sensor 5 for sensing an image of an object imaged via the optical lens assembly 2.

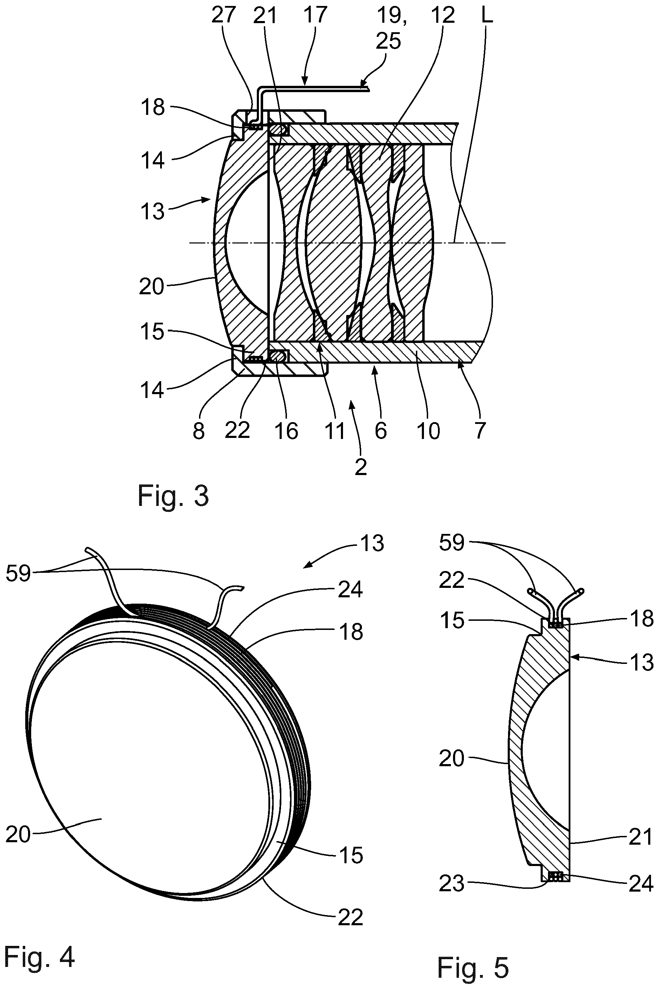

The optical lens assembly 2 comprises a lens mount 6 having a lens holder 7 and a lens cap 8. The lens holder 7 may comprise a base portion 9 and a lens barrel 10. A lens arrangement 11 is arranged inside the lens mount 6. The lens arrangement 11 comprises several lens elements 12 being arranged within the lens holder 7, in particular its lens barrel 10. The lens arrangement 11 further comprises a front element 13, which is arranged at the object-side of the camera module 1. The object-side is the side where an object to be imaged by the optical lens assembly is placed. With regard to fig. 3, the object-side is on the left side of the optical lens assembly 2. In other words, the front element 13 is the outermost lens element of the lens arrangement 11. The front element 13 terminates the lens arrangement 11 to the outer surroundings. The front element 13 is subject to influences from the environment, in particular weather conditions, such as frost, rain and/or fog.

The front element 13 is arranged at the object-side end of the lens holder 7. In the shown embodiment, the front element 13 is placed between the lens cap 8 and the lens holder 7. The lens cap 8 is attached to the lens holder 7 at the object-side of the lens assembly 11. The front element 13 is held in place by the lens cap 8. The lens cap 8 comprises projections 14 interacting with a holding portion 15 formed on front element 13. The holding portion 15 is formed as a radially protruding portion of the front element 13.

The lens cap 8 is attached to the lens holder 7 in a sealing manner using a circumferential sealing element 16 in form of an O-ring. This ensures that no humidity or other pollution can enter the lens holder 7 and compromise the performance of the camera module 1, in particular of the optical lens assembly 2.

To reduce environmental effects on the front element 13, such as frosting and/or fogging, the optical lens assembly 2 comprises a heating device 17. The heating device 17 comprises a heating element 18 for heating the front element 13. In the shown embodiment, he heating element 18 is integrated in the front element 13. The heating device 17 further comprises a wiring 19 for supplying the heating element 18 with electrical energy.

As can be seen in particular from figs 4 and 5, the front element 13 comprises a first surface 20, facing the object-side of the lens arrangement 11. The first surface 20 is an outer surface of the front element 13. The front element further comprises a second surface 21 opposite to the first surface 20. The second surface 21 faces the further lens elements 12 of the lens arrangement 11 and forms an inner surface of the front element 13. The first surface 20 and the second surface 21 are connected by a lateral surface 22. The lateral surface 22 essentially extends along an optical axis L of the lens arrangement 11 (cf. fig. 3).

The heating element 18 is arranged circumferentially along the lateral surface 22. The heating element 18 is recessed inwardly with respect to a radial extension of the lateral surface 18. In the lateral surface 18, a groove 23 is formed, in which the heating element 18 is received. The heating element 18 is protected within the groove 23. In particular, the heating element 18 is not affected by force being applied via the lens cap 8 and/or further lens elements 12. In particular, the heating element 18 is not affected by relative movement of the front element 13 and the lens cap 8. Moreover, the heating element 18 is not exposed to environmental impacts. Being arranged circumferentially along the lateral surface 22, the heating element 18 is not protruding in the optical pathway through front element 13. As such, the heating element 18 directly heats the front element 13 without influencing its optical properties.

The arrangement of the heating element 18 further has the advantage that the heating element 18 does not interact or compromise any coatings of the front element 13, in particular on its first side 20. As such, scratch resistibility and other properties, which may be achieved by such coatings, may be improved.

In the shown embodiment, the heating element 18 comprises a heating wire 24 being wrapped around the lateral surface 22 within the groove 23. Lead outs 59 of the heating wire 24 can connect to the wiring 19 for supplying the heating wire 24 with electrical energy.

The wiring 19 may comprise a lead 25 being routed out of the lens cap 8 and connected to a connector 26. The lead 25 may comprise or be formed by a flextail lead. The lead 25 is routed out of the lens cap 8 via an opening 27 at a lateral surface of the lens cap 8. This way, the routing out of the lead 25 does not compromise the sealing attachment of the lens cap 8 to the lens holder 7. The routing of the wiring 19, in particular the lead 25, is simplified. A particular advantage lies in that the opening 27 does not have to be waterproof. Waterproofing can be simply done by the sealing element 16 between the lens cap 8 and the lens holder 7.

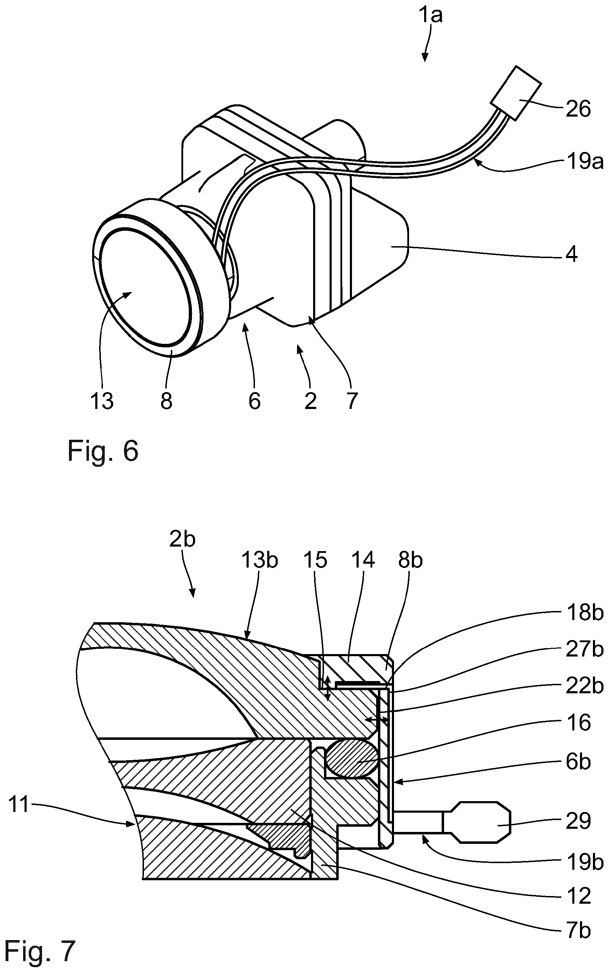

With regard to fig. 6, a further embodiment of a camera module 1a, which is not part of the present invention, is described. Camera module 1a only differs from the embodiment described with regard to figs 1 to 5 in the wiring 19a. The wiring 19a is formed by pigtail leads 28.

With regard to fig. 7, a further embodiment of an optical lens assembly 2b, which is not part of the present invention, is described. The optical lens assembly 2b may, for example, be used in a camera module as that shown in previous figures. The lens mount 6b comprises a lens cap 8b and a lens holder 7b attached to each other in a sealing manner to the lens holder 7b via the sealing element 16. The lens mount houses the lens arrangement 11 with several lens elements 12 and a front element 13b. A heating element 18b is circumferentially arranged around a lateral surface 22b of the front element 13 in a region of the holding portion 15. The heating element 18b comprises a compressable conductor, which is quenched between the projections 14 of the lens cap 8b and the holding portion 15. The heating element 18b is routed out of the lens cap 8b through an opening 27b. The opening 27b may be, but does not need to be waterproof. The heating element 18b connects to a wiring 19b comprising a waterproof flat-blade connector 29.

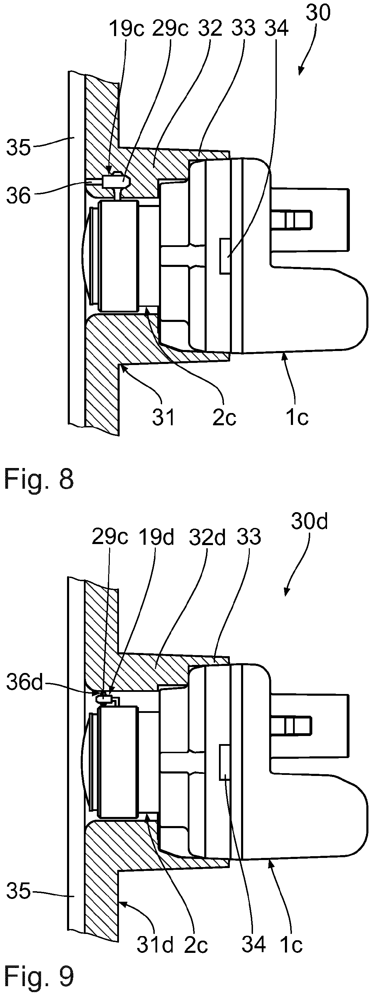

With regard to fig. 8, an embodiment of a camera system 30 is described. The camera system 30 comprises a camera module 1c and a camera enclosure 31. The camera enclosure 31 comprises holding means 32 for holding the camera module 1c. In the shown embodiment, the holding means 32 comprise snap-fit protrusions 33 for releasably connecting to snap-fit indentions 34 of the camera module 1c. The camera system 30 may, for example, be arranged behind a wing front panel 35 of a vehicle.

The camera module 1c may, in particular, correspond to the camera modules described with regard to preceding embodiments, which are not part of the present invention. For example, the optical lens assembly 2c may correspond to the optical lens assembly described with reference to fig. 7.

Wiring 19c of a heating device of the camera module 1c connects to enclosure wiring 36 of the camera enclosure 31. This leads to a particularly easy connectable and reliable electrical connection. In the shown embodiment, wiring 19c may, e.g., comprise a flat-blade connector 29c for connecting to the enclosure wiring 36.

With regard to fig. 9, a further embodiment of a camera system 30d is described. Camera system 30d differs from the camera system 30 of fig. 8 in that the holding means 32d leave more radial space around the optical lens assembly to for accommodating the flat-blade connector 29c which connects to the enclosure wire 36d.

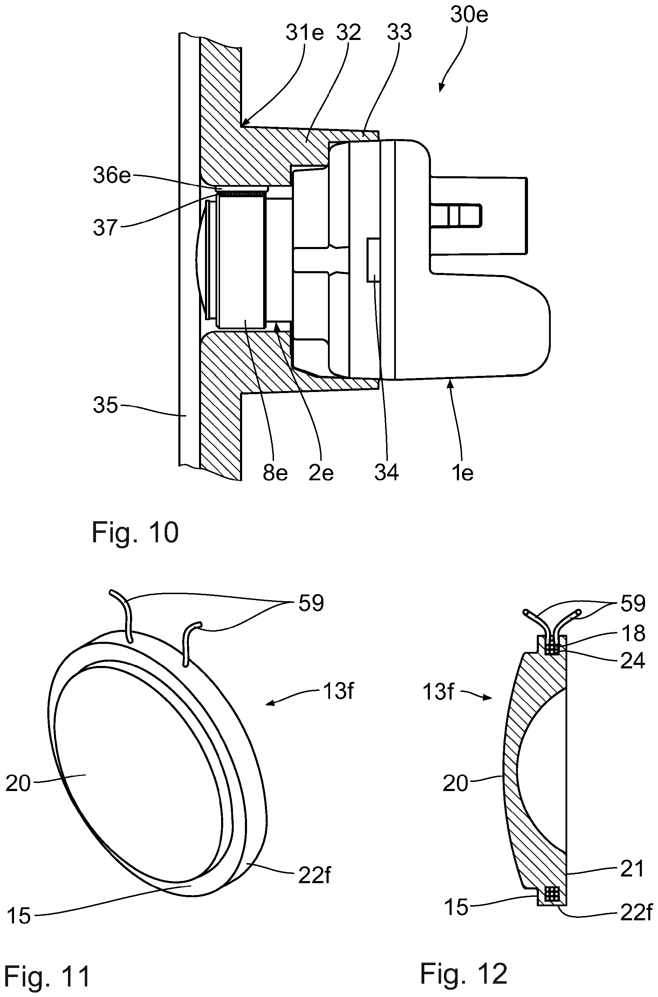

With regard to fig. 10, a further embodiment of a camera system 30e is described. The camera system 30e comprises a camera module 1e and a camera enclosure 31e. The connection to the enclosure wiring 36e is achieved via a pad connector 37 formed on a lateral surface portion of the lens cap 8e. This facilitates electrical connection, when the camera module 1e is attached to the camera enclosure 31e.

With regard to figs 11 and 12, a further embodiment of a front element 13f, which is not part of the present invention, is described. The front element 13f only differs over the front element 13 in that the heating wire 24 is embedded in optical material of the front element 13f. Only the lead outs 59 of the heating wire 24 extend out of the optical material of the front element 13f. The embedding may, for example, by achieved by at least partially closing or filling a groove, in which the heating element 18 is positioned. This improves the protection of the heating element 18, in particular the heating wire 24.

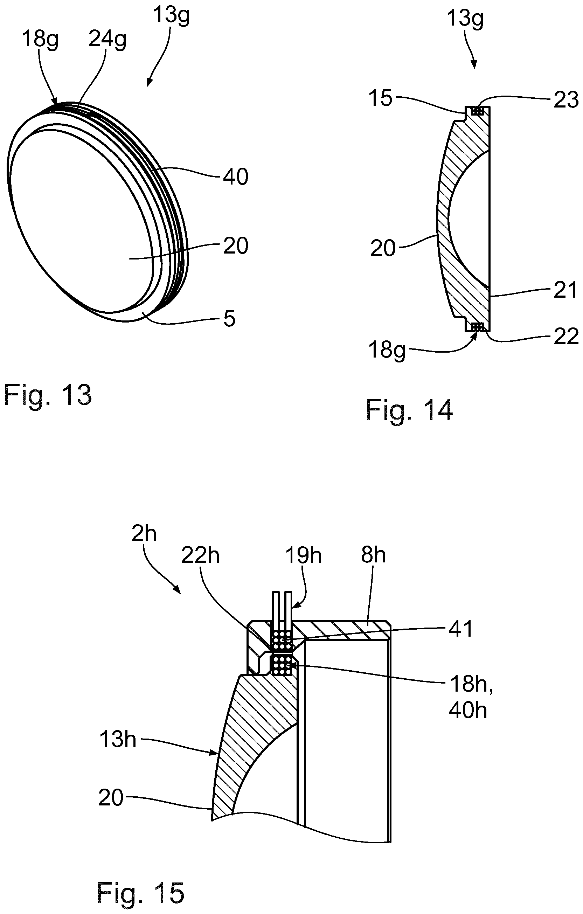

With regard to figs 13 and 14, a further embodiment of a front element 13g, which is not part of the present invention, is described. Front element 13g only differs over the heating element 13 described with respect to figs 4 and 5 in the heating element 18g. The heating element 18g does not comprise lead outs for electrically connecting to further wiring. Instead, the heating wire 24g is short-circuited to form a closed coil 40. The closed coil 40 serves as a secondary coil in an induction coil arrangement for inducing electric current in the heating wire 24. As such, a mechanical connection is not required for supplying electrical energy to the heating wire 24. This facilitates the arrangement and improves the reliability of the heating element 18g. In other embodiments, the heating element 18g may be completely embedded in the optical material of the front element (such as e.g. shown with reference figs 11 and 12). In such a case, lead outs exiting the optical material are not required, as electrical energy can be supplied via induction.

With regard to fig. 15, a further embodiment of an optical lens assembly 2h, which is not part of the present invention, is described. The front element 13h comprises a heating element 18h in form of a completely embedded secondary coil 40h. In the lens cap 8h, a primary coil 41 is housed for inducing current in the secondary coil 40h of the heating element 18h. The secondary coil 41 is supplied with electrical energy via wiring 19h, which is let out the lens cap 8h.

The embodiment of fig. 15 shows an exemplary heating coil arrangement comprising the primary coil 41 and the secondary coil 40h. In the shown embodiment, the primary coil 41 is housed in the lens cap 8h. In other embodiments, the primary coil may be embedded in a lens cap wall of the lens cap. It is also possible to include the primary coil in other parts of the optical lens assembly, e.g. in a lens holder, in particular in a lens barrel. In yet other embodiments, the primary coil may be realized outside of the optical lens assembly, in particular outside of the camera module. For example, the primary coil may be part of a camera enclosure.

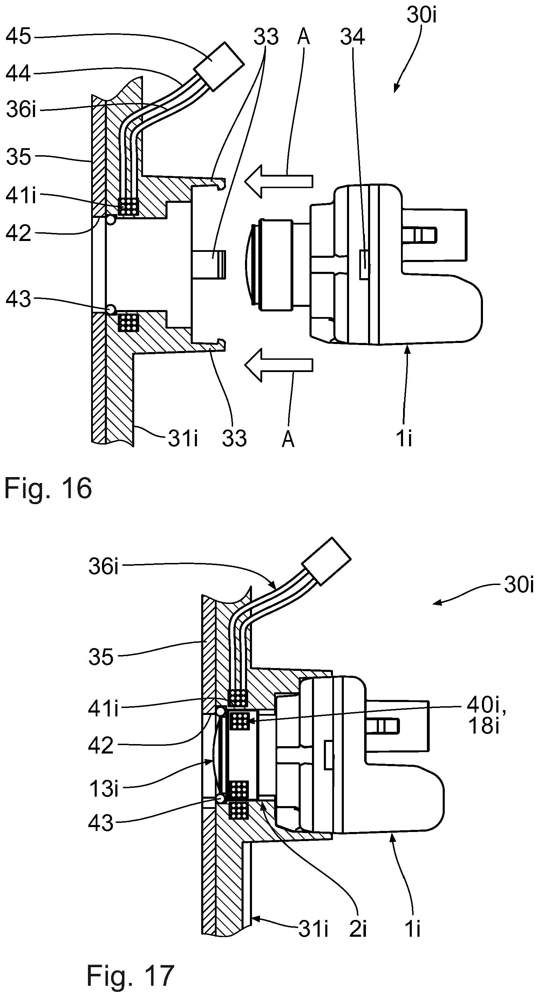

With regard to figs 16 and 17, a further embodiment of a camera system 30i is described. The camera system 30i comprises a camera module 1i and a camera enclosure 31i. In fig. 16, the camera module 1i is shown before being attached to the camera enclosure 31i. For attaching the camera module 1i, the camera module is inserted in the camera enclosure 31i in a direction indicated by arrows A in fig. 16. Upon insertion, the snap-fit protrusions 33 engage the snap-fit indentions 34. Fig. 17 shows the camera system 30i in its assembled form, i.e. with the camera module 1i attached to the camera enclosure 31i.

In figs 16 and 17, the camera system 30i is shown partially cut away for highlighting further details of the camera enclosure 31i and the camera module 1i. The camera enclosure 31i is arranged behind a wing front panel 35 of a car. The wing front panel 35 comprises a cut out 42 behind which the front element 13i is arranged when the camera module 1i is attached to the camera enclosure 31i. For better sealing, a sealing element 43 in form of an o-ring is arranged around the cut out 42.

The camera enclosure 31i comprises enclosure wiring 36i comprising leads 44, a connector 45 and a primary coil 41i. The primary coil 41 is embedded within the camera enclosure 31i. The primary coil 41i interacts with a secondary coil 40i forming induction coil arrangement. The secondary coil 30i forms the heating element 18i of the optical lens assembly 2i of the camera module 1i. As such, the camera module 1i, in particular its optical lens assembly, does not require any wiring for supplying electrical energy to the heating element 18i. The heating element 18i may, for example, be housed in the lens cap, in particular within a lens cap wall.

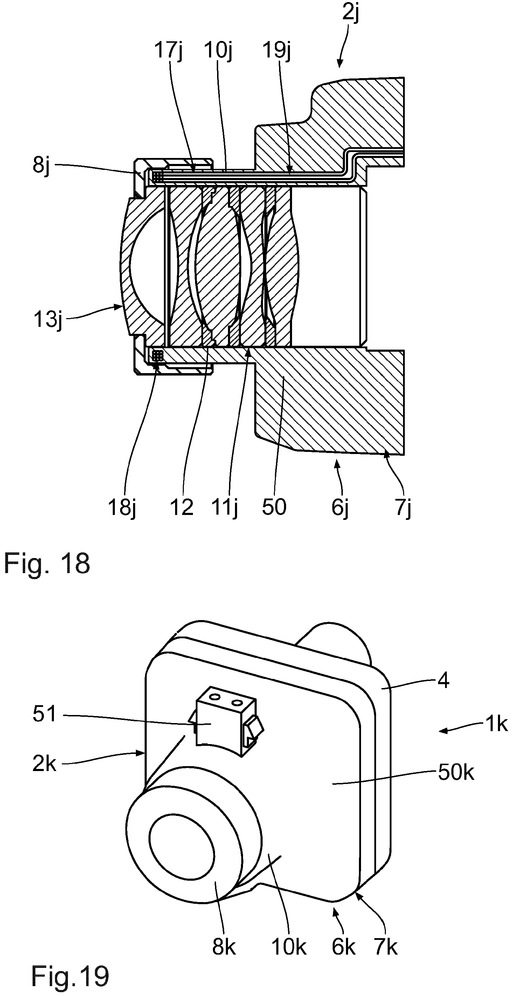

In Fig. 18, a further embodiment of an optical lens assembly 2j for a camera module is shown. The optical lens assembly 2j comprises a heating device 17j with heating element 18j and wiring 19j. Wiring 19j serves for supplying electrical energy to the heating element 18j. The heating element 18j and the wiring 19j are embedded in a lens holder wall 50 of the lens holder 7j, in particular of the lens barrel 10j. This way, the heating element 18j and the wiring 19j are securely positioned within the lens holder 7j. For example, the lens holder 7j may be formed by injection moulding, thereby over-moulding the heating element 18j and the wiring 19j. It is also possible to insert the heating element 18j and/or the wiring 19j within a cavity of the lens holder 7j.

The wiring 19j is routed through the lens holder 17j to its end face, which opposes the object-side of the lens arrangement 11j. Doing so allows connecting the wiring 19j to a printed circuit board of a printed circuit board assembly of a camera module. External connections are not required.

In the shown embodiment, the heating element 18j is embedded in the lens holder wall 50. In other embodiments, a primary coil of an induction coil arrangement may be embedded in the lens holder wall. A secondary coil of the induction coil arrangement, which is comprised by or forms the heating element, may be arranged circumferentially around the front element.

With regard to fig. 19, a further embodiment of a camera module 1k is described. The camera module 1k comprises a lens holder 7k with a lens barrel 10k. For leading out wirings of a heating device of the optical lens assembly 2k, a through barrel connector 51 is provided. The through barrel connector 51 may serve as a connector for connecting further wirings, for example enclosure wirings of a camera enclosure. Through barrel connector 51 may, for example, connect to wirings being embedded in a lens holder wall 50k of the lens holder 7k. For example, the entire heating device, in particular the heating element and the wiring, may be embedded in the lens holder wall 50k and connect to the through barrel connector 51.

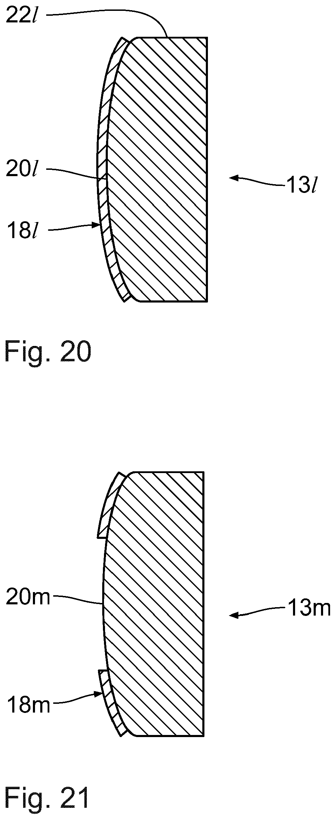

With regard to fig. 20, a further embodiment of a front element 13l, which is not part of the present invention, is described. The front element 13l comprises a heating element 18l which is formed as a transparent conductor on the first surface 20l facing the object-side. The transparent coating may be formed by PEDOT, which has superior optical and electrical properties with regard to ITO, commonly used for conductive coatings. Particularly preferable, the PEDOT coating may be applied using inkjet-printing of PEDOT on the first surface 20l of the front element 13l. The conductive coating may be applied alternatively or additionally to a heating wire of a heating element arranged circumferentially along the lateral surface 22l of the front element 13l.

The front element 13l may be combined with any of the above shown camera modules. Particularly preferable, front element 13l may be combined with wiring routed out of the lens cap. This is particularly advantageous, as the coating 18l is arranged on the object-side of the front element 13l, avoiding complicated routings around the front element 13l.

Instead of coatings with PEDOT, other transparent conductors may be used. For example, transparent conductors made from metal mesh may be used.

With regard to fig. 21, a further embodiment of a front element 13m, which is not part of the present invention, is described. The front element 13m differs over the front element 13l of fig. 20 only in that the conductive coating is not applied over the entire first surface 20m of the front element 13m, but only in a ring-shaped manner, leaving the middle part of the first surface 20m free, thereby not interfering with the optical path which is most relevant for imaging.

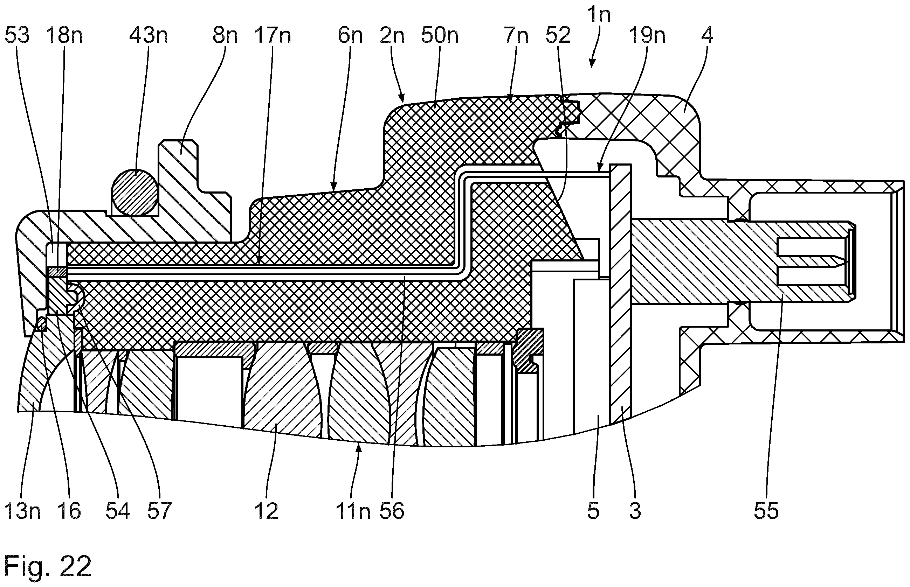

In fig. 22, a further embodiment of the camera module 1n is shown. The camera module comprises an optical lens assembly 2n, which is connected via the lens holder 7n to the back cover 4.

Lens mount 6n comprises the lens holder 7n and lens cap 8n, which is attached to the lens holder 7n. The heating element 18n of the heating device 17n is housed within a wall of the lens mount 6n. In the shown embodiment, the heating element 18n is arranged within an annular space 53, formed between the lens cap 8n and the lens holder 7n. Heating element 18n is not in direct contact with a front element 13n of the lens arrangement 11n.

A heat transfer component 54 is arranged between heating element 18n and a lateral surface of the front element 13n for conducting heat from the heating element 18n to the front element 13n. Heat transfer component 54 is a metallic ring, e.g. made of aluminium and/or brass, surrounding the front element 13n along its lateral surface.

Wiring 19n is routed within the lens holder wall 50n to an end face 52 of the lens mount wall 50, which opposed the object side of the optical lens assembly 2n. Wiring 19n exits the lens mount wall 50n at the end face 52 and connects to the printed circuit board assembly 3, which carries the image sensor 5. Thus, connecting the camera module 1n to further circuitry can be done via a single connector 55. Connector 55 serves for data exchange, in particular for image data exchange, and for supplying electrical energy to the camera module, in particular to the heating device 17n and other components of the printed circuit board assembly 3, e.g. the image sensor 5. Connector 55 may, e.g., be a FAKRA connector.

In the shown embodiment, wiring 19n is routed within a canal 56 formed in the lens holder wall 50n. Canal 56 may be pre-formed in the lens holder wall 50n and the wirings 19n can be inserted in the pre-formed canal 56. For example, lens holder 7n may be formed of a metal, in particular aluminium, which improves heat dissipation of heat generated by the printed circuit board assembly 3, in particular the image sensor 5.

It is also possible, that the lens holder 7n is formed of a plastic material. In this case, it is in particular possible, to embed the wiring 19n within the lens holder wall 50n, e.g. by over-moulding the wiring 19n during injection moulding of the lens holder 7n.

A thermal insulator 57 is arranged between the lens holder 7n and the heat transfer component 54. This reduces heat dissipation of heat generated via the heating element 18n to other parts of the lens mount 7n. The heat is efficiently transferred to the front element 13n. For example, if the lens holder 7n is made of metal, in particular aluminium, heat would otherwise be dissipated to other parts of the lens holder 7n. In case the lens holder 7n is made of plastic material, damaging the plastic material by heat of the heating element is avoided.

Heat transfer component 54 and thermal insulator 57 are part of the lens mount 6. The heating element 18n is housed between the lens cap 8n, the lens holder 7n, the heat transfer component 54 and the thermal insulator 57.

The heat transfer component 54 and thermal insulator 57 may be pre-arranged on the lens holder 7n, in particular in a formfitting manner. In the shown embodiment, thermal insulator 57 is placed within a groove at a front face of the lens mount 7n and heat transfer component 54 has a respective projection engaging with the thermal insulator 57 being placed in the groove.

Since heating element 18n is securely housed within the lens mount wall, in particular within the annular space 53, heating element 18 is securely protected from environmental influences. Further, heating element 18 can be easily connected to wiring 19n, without impairing sealing of the optical lens assembly 2n. Particularly preferable, the positioning and arrangement of the lens elements 12 within the lens mount 7n is not impaired by the heating device 17n, in particular by its heating element 18n. Advantageously, front element 13n can be placed in the lens mount without requiring to connect the heating element 18n to it.

A sealing element 16n in form of an O-ring is positioned between the lens cap 8n and the front element 13n.

The lens cap 8n comprises a sealing member 43n at its outer circumference. Sealing member 43n provides sealing, when the camera module 1n is inserted in a camera enclosure, e.g. in an automotive application.

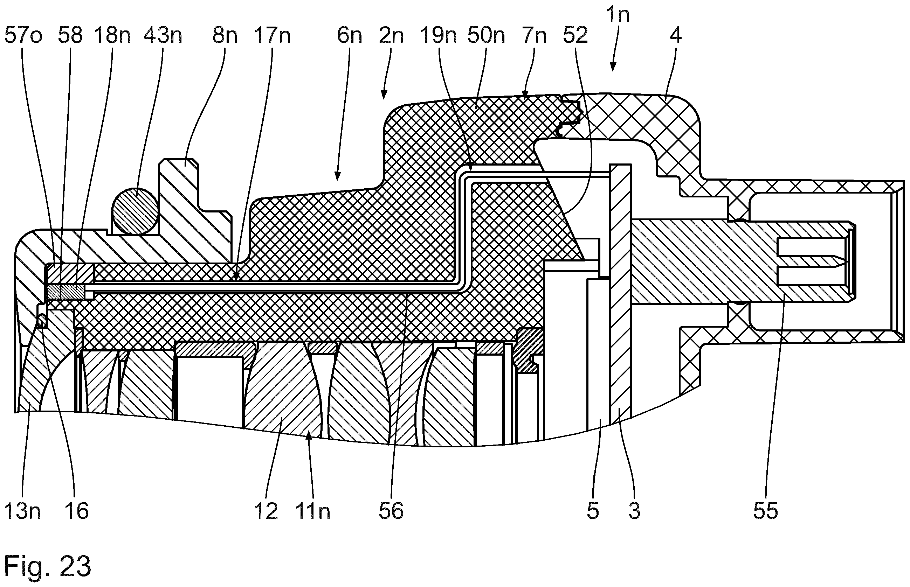

In fig. 23, a further embodiment of a camera module 1o is shown. Camera module 1o is similar to camera module 1n, so that corresponding components are not discussed in detail again.

Camera module 1o differs from camera module 1n only in details of the optical lens assembly 2o, in particular how the heating element 18n is housed within a lens mount wall of the lens mount 6o. Heating element 18n is placed in an annular space 53o between the lens cap 8n and the lens mount 7o. Lens mount 7o comprises a protrusion 58, which contacts a lateral surface of front elements 13n. Protrusion 58 covers the heating element 18n and shields it from the outer environment as well as from the front element 13n.

In a preferred variant of the camera module 1o, the lens mount 7o may be made of metal, in particular aluminium. This way, the protrusion 58 serves as a heat transfer component for transferring heat to the front element 13n.

It is, however, also possible to produce the lens 7o from plastic material. In this case, it is in particular possible to embed the wiring 19n in the material of the lens mount wall 50o by over-moulding the wiring 19n. Further, parts at the front end of the lens holder 7o, in particular protrusion 58, may be formed of a different plastic material, which has a particularly good thermal conductivity. For example, multiple-component injection moulding may be used to form different parts of the lens holder 7o.

A thermal insulator 57o is placed between the heating element 18n and the lens cap 7n. This way, heat dissipation away from the front element 13n is reduced. Heating of the front element 13n is particularly efficient. Thermal insulator 57o may, e.g., be made of a plastic material. Thermal insulator 57o may be formed integrally with the lens mount 7o, e.g. by multi-component injection moulding. It is also possible to attach a thermal insulator 57o to the lens holder 7o, in particular by over-moulding the heating element 18n.

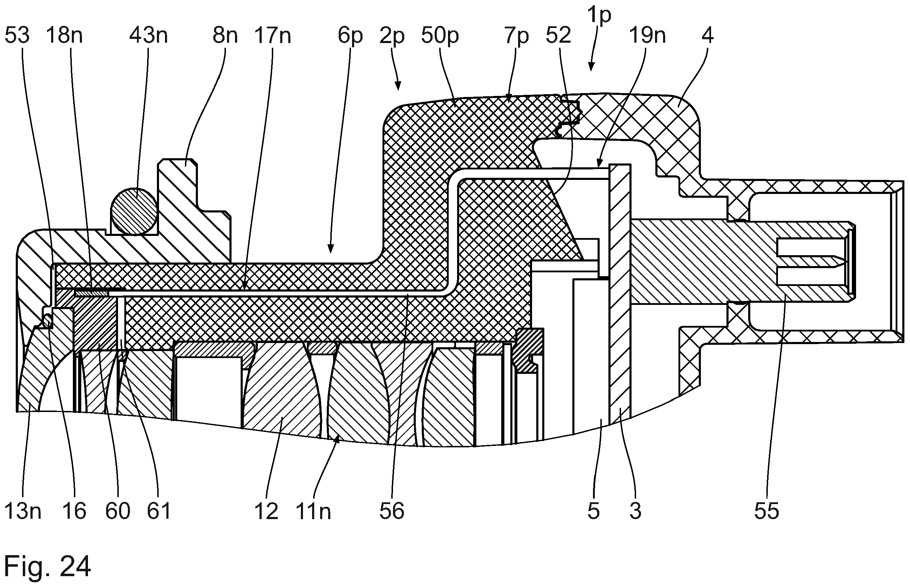

In fig. 24, a further embodiment of a camera module 1p is shown. Camera module 1p is similar to camera module 1n, so that corresponding components are not discussed in detail again.

Camera module 1p differs from camera module 1n in details of the optical lens assembly 6p, in particular how the heating element 18n is housed within a lens mount wall of the lens mount 6p. Heating element 18n is placed between a portion of the lens holder wall 50p and a spacer ring 60, which is used to position the front element 13n. Spacer ring 60 may, preferably, be made of a metal, in particular of aluminium and/or brass. This way, spacer ring 60 serves as a heat transfer component for transferring heat to the front element 13n. Particularly preferably, spacer ring 60 may contact the front element 13n along several surfaces, e.g. along the lateral surface end parts of the second surface, facing away from the object side of the optical lens arrangement 2p. This way, heat is distributed particularly efficiently and homogeneously to the front element 13n.

In the shown embodiment, spacer ring 60 also contacts a further lens element 12 of the lens arrangement 11n. This way, also the further lens element 12 may be heated via the heating element 18n.

A gap 61 is formed between the spacer ring 60 and parts of the lens holder wall 50p. Gap 61 serves for thermal insulation between the spacer ring 60 and further parts of the lens holder wall 50p, leading to an efficient heat transfer to the front element 13n.

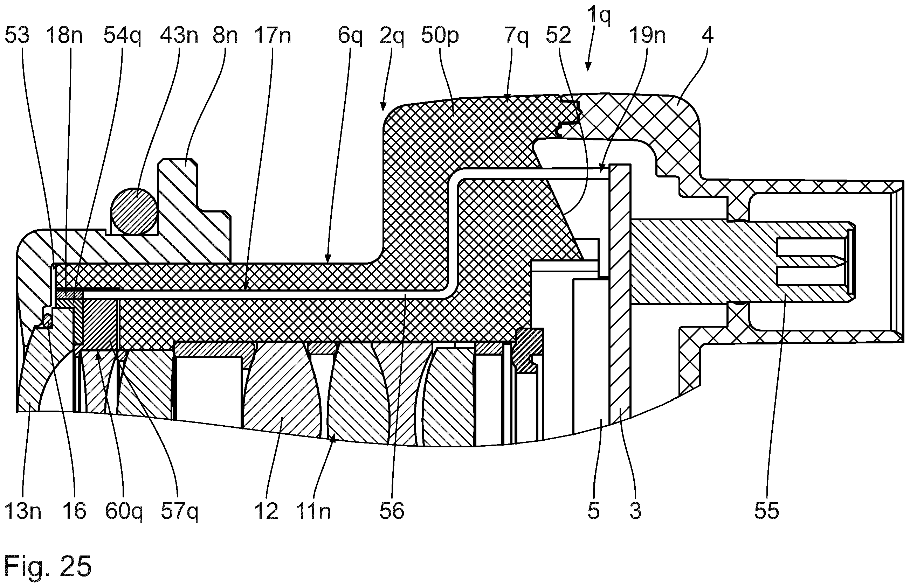

In fig. 25, a further embodiment of a camera module 1q is shown. Camera module 1q mainly coincides with camera module 1p shown in fig. 24.

The optical lens assembly 2q of camera module 1 differs from the optical lens assembly 2p only in the configuration of the spacer ring 60q. The spacer ring 60 is of two-part form. The spacer ring 60q comprises a heat transfer component 54q, being formed of a metal part and a thermal insulator 57q. Heat transfer component 57q contacts the front element 13n, at least circumferentially around its lateral side. In the shown embodiment, heat transfer component 54q also contacts the front element 13n at its second surface, facing away from an object side of the optical lens arrangement 11n. Thermal insulator 57q is positioned between the heat transfer component 54q and parts of the lens mount wall 50p. This way, thermal insulation is improved. Heat transfer to the front element 13n is particularly efficient.

## Claims

1. Optical lens assembly (2i; 2j; 2k; 2n; 2o; 2p; 2q), in particular for a camera module (1i; 1k; 1n; 1o; 1p; 1q), comprising
1.1. a lens mount (6j; 6k; 6n; 6o; 6p; 6q),
1.2. a lens arrangement (11j; 11n) of one or more lens elements (12) inside the lens mount (6j; 6k; 6n; 6o; 6p; 6q), and
1.3. a heating element (18i; 18j; 18n) for heating at least one of the one or more lens elements (12), in particular a front element (13i; 13j; 13n) at an object-side of the lens arrangement (11j; 11n),
1.4. wherein the lens mount (6j; 6k; 6n; 6o; 6p; 6q), in particular a lens holder (7j; 7k; 7n; 7o; 7p) thereof, comprises a lens mount wall (50; 50k; 50n; 50o; 50p) defining an inner space for accommodating the one or more lens elements (12) of the lens arrangement (11j; 11n), **characterized in that** the heating element (18i; 18j; 18n) is housed within the lens mount wall (50; 50k; 50n; 50o; 50p) so that it has no direct contact with the one or more lens elements (12; 13i; 13j; 13n).

2. Optical lens assembly according to claim 1, wherein the lens arrangement (11j; 11n) comprises a front element (13i; 13j; 13n) at an object-side of the lens arrangement (11j; 11n), wherein the front element (13i; 13j; 13n) comprises a first surface (20) facing the object-side, a second surface (21) opposite to the first surface, and a lateral surface (22) connecting the first surface (20) and the second surface (21), and wherein the heating element (18i; 18j; 18n) is arranged circumferentially along the lateral surface (22) of the front element (13i; 13j; 13n).

3. Optical lens assembly (2i; 2j; 2k; 2n; 2o; 2p; 2q) according to any one of the preceding claims, wherein the heating element (18j; 18n) is embedded into the lens mount wall (50; 50k; 50n; 50o; 50p), in particular by over-moulding the heating device (18j; 18n).

4. Optical lens assembly (2n; 2o) according to any one of the preceding claims, wherein the lens mount (6n; 6o;) comprises a lens holder (7n; 7o;) and a lens cap (8n), being attached to the lens holder (7n; 7o; 7p) at an object-side of the optical lens assembly (2n; 2o), and wherein the heating element (18n; 18p) is arranged in between the lens cap (88n) and the lens holder (7n; 7o), in particular within a annular space (53; 53o) formed between the lens cap (8n) and the lens holder (7n; 7o).

5. Optical lens assembly (2n; 2o; 2p; 2q) according to any one of the preceding claims, wherein the lens mount (6n; 6o; 6p; 6q) comprises a heat transfer component (54; 54q; 58; 60) arranged between the heating element (18n) and at least one of the one or more lens elements (12), in particular a front element (13n), of the lens arrangement (11n).

6. Optical lens assembly (2p; 2q) according to claim 5, wherein the heat transfer component (54; 54q; 60) is part of a spacer ring (60; 60q) accommodating at least one of the one or more lens elements (12), in particular the front element (13n).

7. Optical lens assembly (2n; 2p; 2q) according to claim 5 or 6, wherein the heat transfer component contacts a front element (13n) of the lens arrangement (11n), at least circumferentially along a lateral surface of the front element (13n).

8. Optical lens assembly (2p; 2q) according to any one of claims 5 to 7, wherein the heat transfer component contacts the front element (13n), on at least two surfaces thereof.

9. Optical lens assembly (2n; 2p; 2q) according to any one of the preceding claims, wherein the lens mount (2n; 2p; 2q) comprises a thermal insulator (57; 57o; 57q) for thermal shielding of parts of the lens mount (6n, 6o; 6q), in particular the lens holder (7n; 7p), from the heating element (18n) and/or a heat transfer component (54; 54q), which is arranged between the heating element (18) and one of the one or more lens elements (12).

10. Optical lens assembly (2j; 2k; 2n; 2o; 2p; 2q) according to any one of the preceding claims, comprising a wiring (19j) for supplying the heating element (18j) with electrical energy, wherein the wiring (19j; 19k) is housed within the lens mount wall (50; 50k).

11. Optical lens assembly (2j; 2k; 2n; 2o; 2p; 2q) according to claim 10, wherein the wiring (19j) is routed, in particular embedded, within a lens mount wall (50; 50k; 50n; 50o; 50p).

12. Camera module (1i; 1k; 1n; 1o; 1p; 1q), in particular for automotive applications, comprising an optical lens assembly (2i; 2j; 2k; 2n; 2o; 2p; 2q) as claimed in any one of the preceding claims.

13. Camera module (1n; 1o; 1p; 1q) according to claim 12, comprising a printed circuit board assembly (3) with an image sensor (5), wherein the heating element (18j; 18n) is connected to the printed circuit board assembly for supplying electrical energy to the heating element (18j; 18n).

14. Camera system, in particular for automotive applications, comprising
14.1. a camera module (1i; 1k; 1n; 1o; 1p; 1q) as claimed in claim 12 or 13, and
14.2. a camera enclosure to which the camera module (1i; 1k; 1n; 1o; 1p; 1q) is attached.

15. Camera system according to claim 14, wherein the camera module (1i; 1k; 1n; 1o; 1p; 1q) is removably attached to the camera enclosure, in particular by a snap-fit connection.

## Patentansprüche

1. Optische Linsenbaugruppe (2i; 2j; 2k; 2n; 2o; 2p; 2q), insbesondere für ein Kameramodul (1i; 1k; 1n; 1o; 1p; 1q), umfassend
1.1. eine Linsenfassung (6j; 6k; 6n; 6o; 6p; 6q),
1.2. eine Linsenanordnung (11j; 11n) aus einem oder mehreren Linsenelementen (12) im Inneren der Linsenfassung (6j; 6k; 6n; 6o; 6p; 6q), und
1.3. ein Heizelement (18i; 18j; 18n) zum Beheizen mindestens eines des einen oder der mehreren Linsenelemente (12), insbesondere ein vorderes Element (13i; 13j; 13n) an einer Objektseite der Linsenanordnung (11j; 11n),
1.4. wobei die Linsenfassung (6j; 6k; 6n; 6o; 6p; 6q), insbesondere ein Linsenhalter (7j; 7k; 7n; 7o; 7p) davon, eine Linsenfassungswand (50; 50k; 50n; 50o; 50p) umfasst, die einen Innenraum zum Aufnehmen des einen oder der mehreren Linsenelemente (12) der Linsenanordnung (11j; 11n) definiert,
**dadurch gekennzeichnet, dass** das Heizelement (18i; 18j; 18n) innerhalb der Linsenfassungswand (50; 50k; 50n; 50o; 50p) aufgenommen ist, so dass es keinen direkten Kontakt mit dem einen oder den mehreren Linsenelementen (12; 13i, 13j; 13n) hat.

2. Optische Linsenanordnung nach Anspruch 1, wobei die Linsenanordnung (11j; 11n) ein vorderes Element (13i; 13j; 13n) an einer Objektseite der Linsenanordnung (11j; 11n) umfasst, wobei das vordere Element (13i; 13j; 13n) eine erste Fläche (20), die der Objektseite zugewandt ist, eine zweite Fläche (21), die der ersten Fläche gegenüberliegt, und eine Seitenfläche (22), die die erste Fläche (20) und die zweite Fläche (21) verbindet, umfasst und wobei das Heizelement (18i;
18j; 18n) umlaufend entlang der Seitenfläche (22) des vorderen Elements (13i; 13j; 13n) angeordnet ist.

3. Optische Linsenanordnung (2i; 2j; 2k; 2n; 2o; 2p; 2q) nach einem der vorhergehenden Ansprüche, wobei das Heizelement (18j; 18n) in die Linsenfassungswand (50; 50k; 50n; 50o; 50p) eingebettet ist, insbesondere durch Umgießen der Heizvorrichtung (18j; 18n).

4. Optische Linsenanordnung (2n; 2o) nach einem der vorhergehenden Ansprüche, wobei die Linsenfassung (6n; 6o;) einen Linsenhalter (7n; 7o;) und eine Linsenkappe (8n) umfasst, die an dem Linsenhalter (7n; 7o; 7p) an einer Objektseite der optischen Linsenanordnung (2n; 2o) angebracht ist, und wobei das Heizelement (18n; 18p) zwischen der Linsenkappe (88n) und dem Linsenhalter (7n; 7o), insbesondere innerhalb eines ringförmigen Raums (53; 53o), der zwischen der Linsenkappe (8n) und dem Linsenhalter (7n; 7o) gebildet ist, angeordnet ist.

5. Optische Linsenanordnung (2n; 2o; 2p; 2q) nach einem der vorhergehenden Ansprüche, wobei die Linsenfassung (6n; 60; 6p; 6q) eine Wärmeübertragungskomponente (54; 54q; 58; 60) umfasst, die zwischen dem Heizelement (18n) und mindestens einem des einen oder der mehreren Linsenelemente (12), insbesondere einem vorderen Element (13n), der Linsenanordnung (11n), angeordnet ist.

6. Optische Linsenanordnung (2p; 2q) nach Anspruch 5, wobei die Wärmeübertragungskomponente (54; 54q; 60) Teil eines Abstandsrings (60; 60q) ist, der mindestens eines des einen oder der mehreren Linsenelemente (12), insbesondere das vordere Element (13n), aufnimmt.

7. Optische Linsenanordnung (2n; 2p; 2q) nach Anspruch 5 oder 6, wobei die Wärmeübertragungskomponente ein vorderes Element (13n) der Linsenanordnung (1 In) zumindest umlaufend entlang einer Seitenfläche des vorderen Elements (13n) berührt.

8. Optische Linsenanordnung (2p; 2q) nach einem der Ansprüche 5 bis 7, wobei die Wärmeübertragungskomponente das vordere Element (13n) auf mindestens zwei Oberflächen davon berührt.

9. Optische Linsenanordnung (2n; 2p; 2q) nach einem der vorhergehenden Ansprüche, wobei die Linsenfassung (2n; 2p; 2q) einen Wärmeisolator (57; 57o, 57q) zum thermischen Abschirmen von Teilen der Linsenfassung (6n, 6o; 6q), insbesondere des Linsenhalters (7n; 7p), von dem Heizelement (18n) und/oder einer Wärmeübertragungskomponente (54; 54q), die zwischen dem Heizelement (18) und einem des einen oder der mehreren Linsenelemente (12) angeordnet ist, umfasst.

10. Optische Linsenanordnung (2j; 2k; 2n; 2o; 2p; 2q) nach einem der vorhergehenden Ansprüche, umfassend eine Verdrahtung (19j) zum Versorgen des Heizelements (18j) mit elektrischer Energie, wobei die Verdrahtung (19j; 19k) innerhalb der Linsenfassungswand (50; 50k) aufgenommen ist.

11. Optische Linsenanordnung (2j; 2k; 2n; 2o; 2p; 2q) nach Anspruch 10, wobei die Verdrahtung (19j) innerhalb einer Linsenfassungswand (50; 50k; 50n; 50o; 50p) verlegt, insbesondere eingebettet ist.

12. Kameramodul (1i; 1k; 1n; 1o; 1p; 1q), insbesondere für Automobilanwendungen, umfassend eine optische Linsenanordnung (2i; 2j; 2k; 2n; 2o; 2p; 2q) nach einem der vorhergehenden Ansprüche.

13. Kameramodul (1n; 1o; 1p; 1q) nach Anspruch 12, umfassend eine Leiterplattenanordnung (3) mit einem Bildsensor (5), wobei das Heizelement (18j; 18n) mit der Leiterplattenanordnung verbunden ist, um das Heizelement (18j; 18n) mit elektrischer Energie zu versorgen.

14. Kamerasystem, insbesondere für Automobilanwendungen, umfassend
14.1. ein Kameramodul (1i; 1k; 1n; 1o; 1p; 1q) nach Anspruch 12 oder 13 und
14.2. ein Kameragehäuse, an dem das Kameramodul (1i; 1k; 1n; 1o; 1p; 1q) angebracht ist.

15. Kamerasystem nach Anspruch 14, wobei das Kameramodul (1i; 1k; 1n; 1o; 1p; 1q) entfernbar an dem Kameragehäuse angebracht ist, insbesondere durch eine Schnappverbindung.

## Revendications

1. Ensemble objectif (2i ; 2j ; 2k ; 2n ; 2o ; 2p ; 2q), en particulier pour un module de caméra (1i ; 1k ; 1n ; 1o ; 1p ; 1q), comprenant
1.1. une monture d'objectif (6j ; 6k ; 6n ; 6o ; 6p ; 6q),
1.2. un agencement de lentilles (11j ; 11n) d'un ou plusieurs éléments de lentille (12) à l'intérieur de la monture d'objectif (6j ; 6k ; 6n ; 6o ; 6p ; 6q), et
1.3. un élément chauffant (18i ; 18j ; 18n) pour chauffer au moins un du ou des plusieurs éléments de lentille (12), en particulier un élément avant (13i ; 13j ; 13n) du côté objet de l'agencement de lentilles (11j ; 11n),
1.4. dans lequel la monture d'objectif (6j ; 6k ; 6n ; 6o ; 6p ; 6q), en particulier un porte-objectif de cette dernière (7j ; 7k ; 7n ; 7o ; 7p), comprend une paroi de monture d'objectif (50 ; 50k ; 50n ; 50o ; 50p) définissant un espace intérieur pour loger le ou les plusieurs éléments de lentille (12) de l'agencement de lentilles (11j ; 11n),
**caracterisé en ce que** l'élément chauffant (18i ; 18j ; 18n) est logé dans la paroi de monture d'objectif (50 ; 50k ; 50n ; 50o ; 50p) de manière à ce qu'il n'y ait pas de contact direct avec le ou les plusieurs éléments de lentille (12 ; 13i ; 13j ; 13n).

2. Ensemble objectif selon la revendication 1, dans lequel l'agencement de lentilles (11j ; 11n) comprend un élément avant (13i ; 13j ; 13n) sur un côté objet de l'agencement de lentilles (11j ; 11n), dans lequel l'élément avant (13i ; 13j ; 13n) comprend une première surface (20) orientée vers le côté objet, une seconde surface (21) opposée à la première surface, et une surface latérale (22) reliant la première surface (20) et la seconde surface (21), et dans lequel l'élément chauffant (18i ; 18j ; 18n) est agencé circonférentiellement le long de la surface latérale (22) de l'élément avant (131 ; 13j ; 13n).

3. Ensemble objectif (2i ; 2j ; 2k ; 2n ; 2o ; 2p ; 2q) selon l'une quelconque des revendications précédentes, dans lequel l'élément chauffant (18j ; 18n) est intégré dans la paroi de monture d'objectif (50 ; 50k ; 50n ; 50o ; 50p), notamment en surmoulant le dispositif de chauffage (18j ; 18n).

4. Ensemble objectif (2n ; 2o) selon l'une quelconque des revendications précédentes, dans lequel la monture d'objectif (6n ; 6o) comprend un porte-objectif (7n ; 7o ;) et un bouchon d'objectif (8n), fixé au porte-objectif (7n ; 7o ; 7p) sur un côté objet de l'ensemble objectif (2n ; 2o), et dans lequel l'élément chauffant (18n ; 18p) est placé entre le bouchon d'objectif (88n) et le porte-objectif (7n ; 7o), en particulier dans un espace annulaire (53 ; 53o) formé entre le bouchon d'objectif (8n) et le porte-objectif (7n ; 7o).

5. Ensemble objectif (2n ; 2o ; 2p ; 2q) selon l'une quelconque des revendications précédentes, dans lequel la monture d'objectif (6n ; 6o ; 6p ; 6q) comprend un composant de transfert de chaleur (54 ; 54q ; 58 ; 60) agencé entre l'élément chauffant (18n) et au moins l'un du ou des plusieurs éléments de lentille (12), en particulier un élément avant (13n) de l'agencement de lentilles (11n).

6. Ensemble objectif (2p ; 2q) selon la revendication 5, dans lequel le composant de transfert de chaleur (54 ; 54q ; 60) fait partie d'une bague d'espacement (60 ; 60q) accueillant au moins l'un du ou des plusieurs éléments de lentille (12), en particulier l'élément avant (13n).

7. Ensemble objectif (2n ; 2p ; 2q) selon la revendication 5 ou 6, dans lequel le composant de transfert de chaleur entre en contact avec un élément avant (13n) de l'agencement de lentilles (11n), au moins circonférentiellement le long d'une surface latérale de l'élément avant (13n).

8. Ensemble objectif (2p ; 2q) selon l'une quelconque des revendications 5 à 7, dans lequel le composant de transfert de chaleur entre en contact avec l'élément avant (13n), sur au moins deux de ses surfaces.

9. Ensemble objectif (2n ; 2p ; 2q) selon l'une quelconque des revendications précédentes, dans lequel la monture d'objectif (2n ; 2p ; 2q) comprend un isolant thermique (57 ; 57o ; 57q) pour la protection thermique de parties de la monture d'objectif (6n, 6o ; 6q), en particulier le porte-objectif (7n ; 7p), vis-à-vis de l'élément chauffant (18n) et/ou d'un composant de transfert de chaleur (54 ; 54q), qui est placé entre l'élément chauffant (18) et l'un du ou des plusieurs éléments de lentille (12).

10. Ensemble objectif (2j ; 2k ; 2n ; 2o ; 2p ; 2q) selon l'une quelconque des revendications précédentes, comprenant un câblage (19j) pour alimenter l'élément chauffant (18j) en énergie électrique, dans lequel le câblage (19j ; 19k) est logé dans la paroi de monture d'objectif (50 ; 50k).

11. Ensemble objectif (2j ; 2k ; 2n ; 2o ; 2p ; 2q) selon la revendication 10, dans lequel le câblage (19j) est acheminé, en particulier intégré, à l'intérieur d'une paroi de monture d'objectif (50 ; 50k ; 50n ; 50o ; 50p).

12. Module de caméra (1i ; 1k ; 1n ; 1o ; 1p ; 1q), en particulier pour des applications automobiles, comprenant un ensemble objectif (2i ; 2j ; 2k ; 2n ; 2o ; 2p ; 2q) selon l'une quelconque des revendications précédentes.

13. Module de caméra (1n ; 1o ; 1p ; 1q) selon la revendication 12, comprenant une carte de circuit imprimé (3) avec un capteur d'image (5), dans lequel l'élément chauffant (18j ; 18n) est connecté à la carte de circuit imprimé pour fournir de l'énergie électrique à l'élément chauffant (18j ; 18n).

14. Système de caméra, en particulier pour des applications automobiles, comprenant
14.1. un module de caméra (1i ; 1k ; 1n ; 1o ; 1p ; 1q) selon la revendication 12 ou 13, et
14.2. un boîtier de caméra auquel le module de caméra (1i ; 1k ; 1n ; 1o ; 1p ; 1q) est fixé.

15. Système de caméra selon la revendication 14, dans lequel le module de caméra (1i ; 1k ; 1n ; 1o ; 1p ; 1q) est fixé de manière amovible au boîtier de caméra, en particulier par un raccordement encliquetable.
